# EUROPEAN PATENT APPLICATION

(11) **EP 0 663 482 A2**
(43) Date of publication of application: **19.07.1995**
(21) Application number: 95300172.4
(22) Date of filing: 12.01.1995
(51) Int. Cl.: E04B 1/94

(54) **Fire-resistant panel**

(30) Priority: 14.01.1994 GB 9400640
(71) Applicant: CAPE DURASTEEL LIMITED, Wellingborough, Northamptonshire NN8 4HB (GB)
(72) Inventor: Ridoutt, William David, Northampton NN3 3AG (GB)
(74) Representative: Silverman, Warren

(57) **Abstract**

A fire-resistant panel structure which provides fire resistance for at leat one hour comprises opposed metal sheets between is disposed a porous filling composition comprising cement, a fibrous material and at least one chemical component which is a source of a vapour phase product when raised to elevated temperature. The composition is to yield at least two vapour phase products at different elevated temperatures to an extent sufficient to delay increase in temperature of heat transmission from the fire incident side of the panel to the opposite side while a vapour phase product is being produced at each elevated temperature. As result of its being porous, the composition enables free escape of vapour phase products within the panel to take place substantially without damage thereby to the integrity of the structure.

## Description

This invention relates to fire-resistant panels and more particularly to fire-resistant panels with enhanced fire-delaying characteristics.

A traditional form of fire-resistant panel is the so-called "Durasteel" sheet (Durasteel is a Registered Trade Mark) which is generally a sandwich structure of galvanised steel sheets between which is a mix of chemicals, currently 97% by weight Portland cement and 3% by weight cellulosic material. This panel was developed from a precursor thereof used in roofing as a substitute for roof cladding and which had corrugations, with the galvanised sheet generally being in the middle of the structure and coated on both sides with the mix of chemicals; the fire-resistant nature of such panels made them an acceptable alternative to asbestos cement sheets. The provision of corrugations indeed enhanced the adhesion of the chemical material to the galvanised steel sheet. Subsequently, a flat product was designed with the aforementioned sandwich structure and has became the standard type of product. The "filling" of the structure is reliably retained in place owing to the presence of tabs formed by stamping from the steel sheets.

Conventional fire-resistant panels of such type have a thickness of 9.5 mm, with the galvanised metal sheets being about 0.5 mm thick. Such panels are generally able to withstand an applied fire temperature of about 900°C for about 15 minutes, during which period the temperature on the side remote from the fire will be kept down to a value of less than 140°C. However, for many purposes a considerably longer fire-resistance (i.e. so that the temperature on the side remote from the fire is kept below 140°C) is needed so that the panels will meet BS 476, parts 20 and 22 relating to the fire resistance of building elements. In general, fire-resistant periods of the order of one hour and more are desired.

A secondary disadvantage of such panels is their considerable weight owing to the high density of materials in use in their construction, namely steel and cement which effectively precludes increasing the thickness of the panels to increase their fire-resistant character.

Mention may be made of GB-A-2247420 which is directed to fire-protected materials having an intumescent coating composition applied to the exterior of the materials requiring protection against fire, which materials include metal structural elements. The coating compositions comprise an aqueous mixture of water soluble alkali metal silicate, optionally a hydrated metal silicate clay, and an inorganic particulate material which when exposed to fire temperatures endothermically releases a non-inflammable gas. The intumescent composition itself insulates the member to which it is applied from fire temperatures and is capable of forming a vitreous surface barrier when exposed to fire.

It is an object of the present invention to provide a sandwich panel structure of the aforementioned type which has enhanced fire-resistant properties.

According to one aspect of the present invention, there is provided a fire-resistant panel structure which comprises opposed metal sheets between which is disposed a porous filling composition comprising cement, a fibrous material and at least one chemical component which is a source of a vapour phase product when raised to elevated temperature, the composition yielding at least two vapour phase products at different elevated temperatures to an extent sufficient to delay increasing temperature of heat transmission from a fire-incident side of the panel structure to the opposite side while a vapour phase product is being produced at each elevated temperature and which composition, through being porous, enables free escape of vapour phase products within the panel to take place substantially without damage thereby to the integrity of the structure.

According to a second aspect of the invention, there is provided a method for the production of a fire-resistant panel as claimed in any preceding claim, which comprises forming a slurry of the cement, the at least one chemical component and the fibrous material with water, applying the slurry to a first metal sheet structure, applying a light metal sheet to the top of the slurry, reducing the water content of the slurry by application of a vacuum to the sandwich structure that is produced to draw water therefrom and allowing setting of the dewatered slurry thus produced to take place, at least one of the metal sheets being formed with surface openings sufficiently small to prevent travel of the slurry therethrough but which allows water to pass therethrough as a result of application of the vacuum.

By working in accordance with the present invention, it is possible to reduce considerably the amount of cement even to as little as 40 to 60% by weight of the composition between the metal sheets. This, in itself, helps reduce the weight of the panel. Enhanced weight reduction coupled with porosity improvement within the structure can be achieved by incorporating a density lowering material such as glass microspheres within the composition. Such material may be present in an amount of up to 20% by weight.

The chemical components is/are utilised to delay the progress of temperature wave fronts across the sandwich structure. A minimum of two temperature wave fronts is to be made available. A low temperature wave front, which will be stabilised at 100°C while vaporisation of water takes place, will be generally be present. This wave front will depend primarily on loss of water such as water of hydration or water of crystallisation attached to molecules in the composition or even water present freely in the composition. There will additionally be a chemical reaction wave front which is held up as thermal energy is utilised to achieve decomposition of a specific chemical component. This will result from the breakdown of salts such as sulphates and more particularly carbonates and/or bicarbonates which will liberate environmentally acceptable carbon dioxide. Panels embodying the invention can readily be designed so that, if the side exposed to fire reaches a temperature of about 900°C, it will be possible, to keep the temperature on the opposite side to less than 140°C for as much as one hour for a 25 mm thick panel. Such a panel will be thicker than the more conventional panels having a thickness of about 9.5 mm but, as a result of weight reducing measures such as reduced cement content and presence of glass microspheres, the increasing thickness does not mean that there is an increase in weight per unit area.

The microporous nature of the filling of a panel is attributable primarily to the presence of the fibrous material which is also present for imparting strength and cohesiveness to the filling. Cellulosic fibres as conventionally employed in Durasteel panels and other organic fibres may be employed for this purpose, although it is also possible to utilise inorganic fibres such as glass fibres, boron carbide fibres, carbon fibres and even metal filamentary material for this purpose.

A variety of density lowering materials may be incorporated in the composition, of which glass microspheres are the preferred materials. These may be the so-called cenospheres, ceramic microballoons or Scotchlite glass bubbles. Pumice and vermiculite may also be used as density lowering material. When applied in a layer 25 mm thick with Portland cement (OPC), such density lowering materials will provide layer densities as follows:-
- Scotchlite: 17.1 kg/sq.m.
- Ceramic microballoons: 21.2 kg/sq.m.
- Cenospheres: 23.7 kg/sq.m.
- Low density silica: 25.6 kg.sq.m.
- Vermiculite: 28.0 kg/sq.m.

Essential to the panels of the invention is the provision of a chemically acting source of thermal insulation. Substances which can be utilised in such manner to provide thermal insulation through loss of water alone include aluminium tri-hydroxide, lithium hydroxide, magnesium hydroxide and molecular sieves. Substances which decompose and in so doing hold up the passage of the temperature wavefront through the panel, include calcium carbonate, magnesium carbonate, manganese carbonate, sodium carbonate, sodium sulphate and zinc sulphate. The use of sulphates will generally have to be avoided owing to the undesirable decomposition products produced, specifically SO₂. In general it will be the practice to employ carbonates or bicarbonates.

A further component which may be present in the composition is a chemical of high opacity to infra-red radiation. Any substance which has the capacity of reflecting electromagnetic radiation will be generally suitable for this purpose but it has been found that titanium dioxide is particularly effective.

Thus taking into account the components which have been already indicated as ones to be included within fire-resistant panels embodying the invention, it is preferred according to the present invention, that overall a composition be prepared, having as dry weight, contents of:-
- Portland cement: 40 to 60 % by wt
- Fibrous material: 4 to 10% by wt
- Magnesium carbonate: 8 to 20 % by wt
- TiO₂: 0 to 30 % preferably 30% by wt
- Glass bubbles: 0 to 50% by wt.

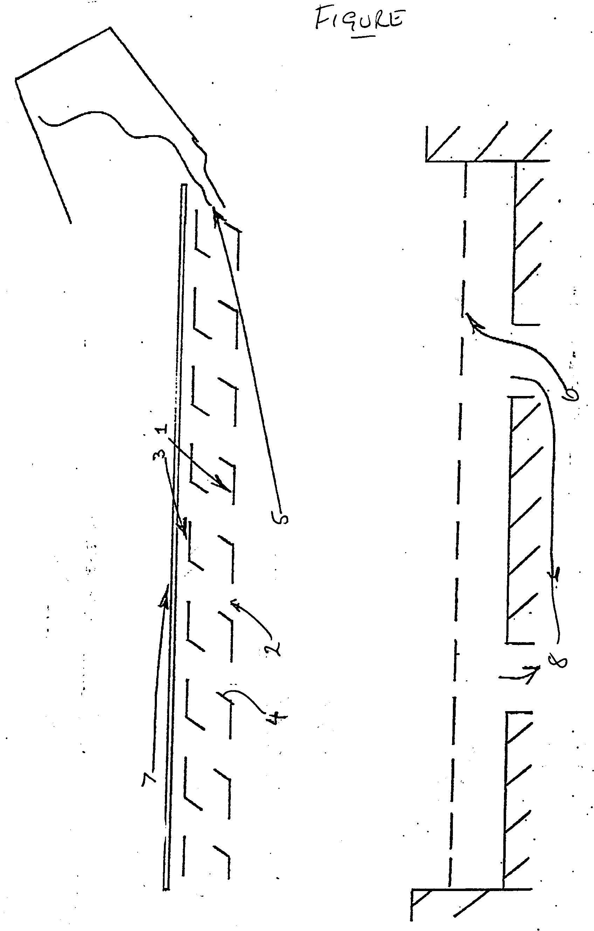

The following Example illustrates the invention. In the Example, reference will be made to the accompanying drawing which shows schematically the arrangement for production of a fire-resistant panel embodying this invention.

### EXAMPLE

A slurry was prepared having a dry composition of 46% by wt. OPC, 4% by wt. cellulosic fibres, 12% by wt. MgCO₃, 18% by wt. TiO₂ and 20% by wt. of glass microspheres. The dry components were mixed with water (22% by weight of the total weight of dry components) to form a slurry which was then used in the production of a fire-resistant panel embodying the invention by a modification of the Magnani process which is shown schematically in the accompanying drawing.

Assembled for this process was a pair of opposed 0.5 mm galvanised steel sheets 1 and 3 spaced apart by 25 mm and formed each with a plurality of apertures 2 by stamping to provide tabs 4. A slurry 5 as aforesaid is introduced between the panels. The apertures 2 are insufficiently large to allow passage of the slurry therethrough while the tabs 4 extend into the slurry 5 to enhance keying thereof. Below the arrangement of steel sheets 1 and 3 is a perforated steel sheet support 6 onto which the panels are lowered while being covered with a blanking panel 7. A ducting arrangement 8 is connected to a vacuum pump (not shown) and the latter is utilised to reduce the water content of the slurry to 15% before equilibration or curing of the slurry has taken place.

The panel thus produced was utilised as panel (A) in a comparative test to indicate the enhanced fire-resistant behaviour thereof. Also tested were a panel (B) of like thickness in which the set slurry between the galvanised steel sheets had a like water content and had been formed using a mixture of OPC and cellulosic fibres in a weight ratio of 97:3 and a panel (C), a panel having a thickness of 9.5 mm, i.e. a cement/cellulosic fibre filling as in panel B but of 8.5 mm thickness between 0.5 mm galvanised steel sheets. All three panels were exposed to a fire incident on one surface such as to raise the temperature of the latter to 950°C. The opposite surfaces of the panels were monitored for temperature. It was found that the temperature at the fire-remote side of the panel (A) remained at 140°C for about one hour, whereas panels (B) and (C) were able to maintain such relatively low temperature for about 30 minutes and 15 minutes respectively.

## Claims

1. A fire-resistant panel structure which comprises opposed metal sheets between which is disposed a porous filling composition comprising cement, a fibrous material and at least one chemical component which is a source of a vapour phase product when raised to elevated temperature, the composition yielding at least two vapour phase products at different elevated temperatures to an extent sufficient to delay increasing temperature of heat transmission from a fire-incident side of the panel structure to the opposite side while a vapour phase product is being produced at each elevated temperature and which composition, through being porous, enables free escape of vapour phase products within the panel to take place substantially without damage thereby to the integrity of the structure.

2. A fire-resistant panel structure as claimed in claim 1, wherein at least one of the metal sheets is formed with a plurality of apertures therein.

3. A fire-resistant panel structure as claimed in claim 1 or 2, wherein the porous filling composition comprises from 40 to 60% by weight of cement.

4. A fire-resistant panel structure as claimed in any preceding claim, wherein the porous filling composition comprises density lowering material in an amount of up to 20% by weight.

5. A fire-resistant panel structure as claimed in claim 4, wherein glass microspheres are comprised by the density lowering material.

6. A fire-resistant panel structure as claimed in any preceding claim, wherein the porous filling composition comprises at least two chemical components, one of which produces a low temperature wave front stabilisation at 100°C while vapourisation of water takes place.

7. A fire-resistant panel structure as claimed in claim 6, wherein said one component is selected from aluminium tri-hydroxide, lithium hydroxide, magnesium hydroxide and molecular sieves.

8. A fire-resistant panel structure according claim 6 or 7, which contains in the porous filling composition a second substance which is a carbonate and/or bicarbonate selected preferably from calcium carbonate, magnesium carbonate, manganese carbonate and sodium carbonate.

9. A fire-resistant panel structure as claimed in any preceding claim, having a porous filling composition such that if one side is exposed to a fire to cause it to reach a temperature of about 900°C, the opposite side will be kept to a temperature of about 140°C for up to one hour when the panel has an overall thickness of 25 mm.

10. A fire-resistant panel structure as claimed in any preceding claim, wherein the porous filling composition comprises cellulosic fibres, glass fibres, boron carbide fibres, carbon fibres or metal filamentary material.

11. A fire-resistant panel structure as claimed in any preceding claim, which additionally comprises a chemical substance of high opacity to infrared radiation such as titanium dioxide.

12. A fire-resistant panel structure as claimed in claim 1 or 2, wherein the porous filling composition contains:
Portland cement 40 to 60% by weight
Fibrous material 4 to 10% by weight
Magnesium carbonate 8 to 20 % by wt
TiO₂ 0 to 30 % preferably 30% by wt
Glass bubbles 0 to 50% by wt.
Water to 100% by weight

13. A method for the production of a fire-resistant panel as claimed in any preceding claim, which comprises forming a slurry of the cement, the at least one chemical component and the fibrous material with water, applying the slurry to a first metal sheet structure, applying a light metal sheet to the top of the slurry, reducing the water content of the slurry by application of a vacuum to the sandwich structure that is produced to draw water therefrom and allowing setting of the dewatered slurry thus produced to take place, at least one of the metal sheets being formed with surface openings sufficiently small to prevent travel of the slurry therethrough but which allows water to pass therethrough as a result of application of the vacuum.

14. A method as claimed in claim 13, wherein there is utilised a slurry having a water content of about 22% by weight of the total weight of dry components and whose water content is reduced to about 15% as a result of the application of the vacuum.
